(19) Europäisches Patentamt
European Patent Office
Office européen des brevets

(11) Publication number: 0 254 997
A2

(12) EUROPEAN PATENT APPLICATION

(21) Application number: 87110361.0

(22) Date of filing: 17.07.87

(51) Int. Cl.⁴: B29C 51/10

(30) Priority: 31.07.86 IT 2135386

(43) Date of publication of application:
03.02.88 Bulletin 88/05

(84) Designated Contracting States:
AT BE CH DE ES FR GB GR LI LU NL SE

(71) Applicant: Bocchi, Luigi
via dei Cignoli, 1
I-20151 Milano(IT)

(72) Inventor: Bocchi, Luigi
via dei Cignoli, 1
I-20151 Milano(IT)

(74) Representative: Lecce, Giovanni
Ufficio Internazionale Calciati S.r.l. Via G.
Negri 10
I-20123 Milano(IT)

# (54) Method for the production of containers in thermoplastic material, in particular sheets of polyethylenterephthalate and containers thus obtained.

(57) Method to produce heat resistant polyethylenterephthalate containers by means of thermoforming with two-way stretching of a sheet (1) of unstretched amorphous polymer in a die (2) kept at temperature near 180°C. The container is consolidated and extracted by means of a counterdie (4), cooled and provided with suction means.

The containers thus obtained are stable at sterilization temperature in boiling water and in steam at 130°C.

Fig.4

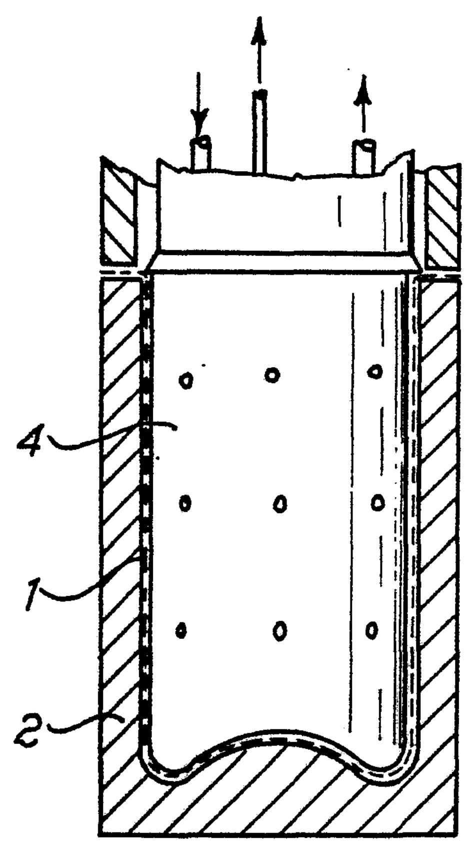


EP 0 254 997 A2

# METHOD FOR THE PRODUCTION OF CONTAINERS IN THERMOPLASTIC MATERIAL, IN PARTICULAR SHEETS OF POLYETHYLENTEREPHTHALATE AND CONTAINERS THUS OBTAINED.

The present invention refers to a method for the production of containers in thermoplastic material, in particular sheets of polyethylenterephthalate, and containers thus obtained. More in particular, the present invention refers to a method for the production of containers from laminated sheets of amorphous polyethylenterephthalate.

As known, polyethylenterephlathate forms part of the polyester resins, i.e. of the resins obtained by polycondensation or polytransesterification of a polycarboxilic acid or of one of its esters with a polyvalent alcohol with formation of a plurality of ester links (poly-esters).

The particular types of acids and alcohols chosen and the posible presence of other comonomers determine various categories of polyesters.

In particular, we recall:

1) unsaturated polyesters: they are linear polyesters dederived from bicarboxilic acids and bivalent alcohols capable of forming crossed links with vinilic monomers, giving origin to thermosetting capolymers;

2) saturated polyesters: they are polyesters with high-molecular weight and very oriented, derived from bicarboxilic acids and bivalent alcohols which are generally used to pro duce yarns and films of various thicknesses, but always thermoplastic.

The first group is mainly worked by pouring, thanks to the easy manipulation in the liquid state, the easy penetration between the reinforcing fibres and the escellent dimensional stability of the pooducts. However, it needs a large number of dies and counterdies.

The second group permits us to obtain, by means of spinning, yarsns suited to any type of fabric, and, through lamination, laminated sheets of any thickness, colour and possible longitudinal profiling.

Also, thanks to their thermoplasticity, the laminated sheets can be shaped, by thermoforming, into any article with exceptional characteristics, particularly if special methods, such as two-way stretching, are adopted. Among these materials particular importance has been acquired bypolyethylenterephthalate containing the repetitive units:

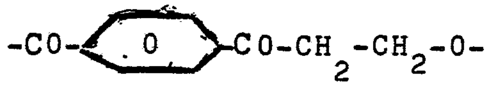

Polyethylenterephthalate does not have unsaturated links and normally therefore does not reticulate so the product remains thermoplastic.

Polyethylenterephthalate is a colourless product which melts at around 265°C, soluble at environmental temperature in fluoracetic acid and phenols. For cooling of the melted mass, it can be obtained in amorphous form, stable at environmental temperature. The crystallization speed of the amorphous product increases with temperature and reaches a maximum of around 180°C.

Crystalline density is 1.45 $mg/cm^{-3}$. It has a glass transition temperature (Tg), which, for the amorphous material, is approximately 80° and varies with crystallinity. It is thus possible to have a totally amorphous product with thermal distortion of 115°C, according to the usual standards.

It has now been surprisingly found by the claimant that, when a product formed of polyethylenterephthalate with dual two-way stretchng is placed in contact with a surface heated to a temperature near 180°C for a very short time then rapidly cooled, it very quickly acquires high heat resistance characteristics, changing from a thermoplastic product to a product more resistant to temperature. Therefore, for example, a bistretched polyethylenterephthalate container, to be used for food packs, if submitted to this heat treatment, can be sterilized in boiling water or with steam at 130°C, without any variations in form and characteristics.

The object of the present invention is therefore a method for the production of a product formed of bistretched polyethylenterephthalate, heat resistant at temperatures above boiling point and in steam at 130°C, comprising the following stages:

a) form the sheet of polyethylenterephthalate unstretched in a die at temperature equal to, or near, the sheet slip temperature;

b) submit the sheet to two-way expansion (stretching);

c) place the bistretched sheet in contact with the inside surface of the die heated to temperature near 180°C;

d) insert in the container thus formed a counterdie, complementary to the die, cooled and kept in suction;

e) extract the container formed.

The sheet slip temperature depends on the type of polyester used and is generally around 160-165°C.

Two-way stretching or expansion of the sheet, while at slip temperature, can pereferably be obtained by inserting air or inert gas under pressure first between die and sheet then between counterdie and sheet.

The time the bistretched sheet remains in contact with the inside surface of the die is very brief: some fractions of a second.

The cooling counterdie is kept at low temperature by the circulation of cold water or cooling liquid at 5°C and is connected to a vacuum pump by means of peripheral holes to facilitate the subsequent extraction of the product formed.

The method of the present invetnion persmits the production, in particular, of containers to be used welded, like those for soft drinks, or with free mouth like trays, used for the food, cosmetic industry etc.

Without adhering to any particular theory, it is assumed that the results of heat resistance, obtained through the method of the present invention, are attributable to the fact that crystallization of the polyenterephthalate takes place at high speed and in a very short time, as the mass has already absorbed the thermoforming temperature and can very quickly surpass the gradient towards crystallization.

Moreover, the rapid cooling operates a sort of temperature, which contrasts the tendency to shrinkage due to the rise in density, creating a surface layer with higher mechanical and thermic characteristics. However, the above interpretation should not be considered limitative of the scope of the present invention.

To more fully understand the present invention, a detailed description is given of the method used to obtain a particular form of a container, referring to the attached drawings, which represent a preferred, illustrative but unbinding version of the present method.

In the drawings:

fig. 1 is a schematic diagram of the longitudinal extension of the sheet;

fig. 2 shows the radial retraction phase;

fig. 3 shows the radial expansion phase of conformation and the start of crystallization;

fig. 4 shows the cooling and suction phase on the cold counterdie for extraction.

Sheet 1 of polyethylenterephthalate or equivalent is first brought, with usual methods, to the thermoforming temperature. Sheet 1, heated to thermoforming temperature, is thrust towards the bottom of the die 3 by means of a counterdie 3, kept at temperature near slip temperature and slightly higher, according to the type of material used. This temperature is generally around 160-166°C.

The die is kept at higher temperature of around 180°C with slight variation according to the thickness and type of material.

The die 2 is generally kept at 155-175°C.

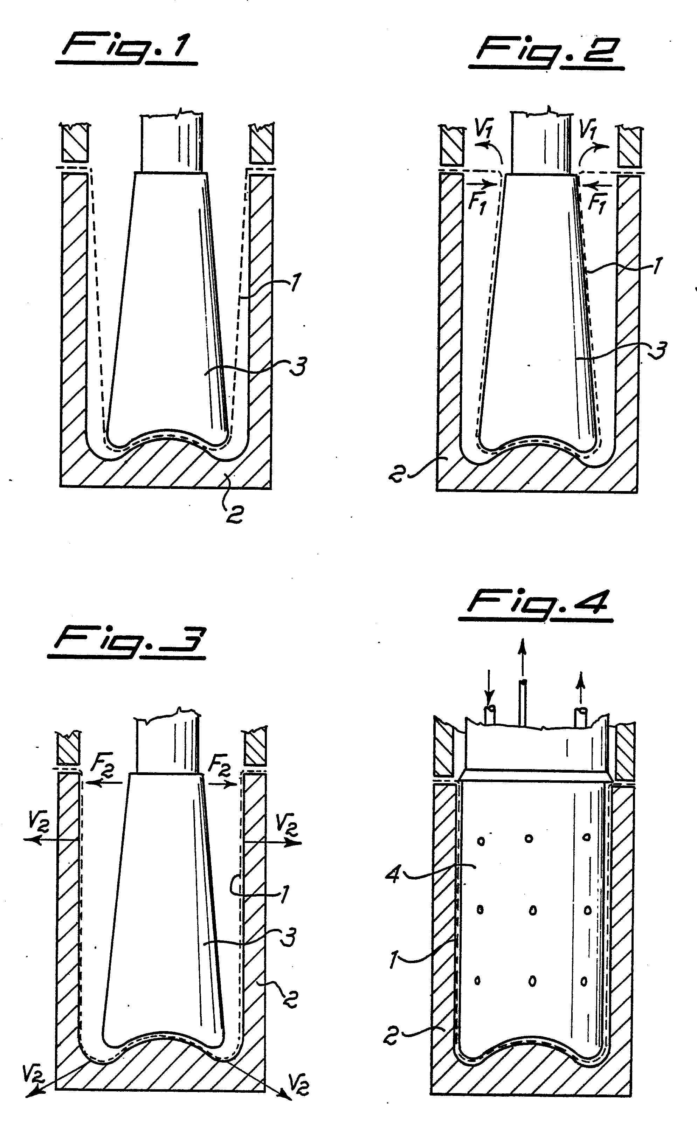

When the counterdie 3 reaches the bottom (see fig. 1), pressure is exerted with the usual means between die 2 and sheet 1, which has become of truncated cone shape, thrusting it in direction of the arrows (see fig. 2) to adhere to the thermoregulated counterdie 3. A container with upward convergent transition is thus obtained. This container conformation can be obtained by means of vacuum or by integrating the pressure with the vacuum applied between die and sheet (arrows V1). After the time necessary for sheet 1 to detension and stabilize itself, air or compressed inert gas is introduced between counterdie 3 and sheet 1. In this way, sheet 1 is detached from counterdie 3, and, according to the arrows F2, comes into contact with the walls of the die 2, having aslightly truncated cone shape and divergent in upward direction. Sheet 1, which, up to this stage of the process, has not risen above 165°C, is in the glass state and has undergone two-way expansion, elimination directional tension which makes the container formed fragile.

According to the present invention, when sheet 1 is in contact with the walls of die 2, heated to higher temperature of up to 180°C, it quickly reaches the crystallization and reticulation temperature, thanks to the heating of first forming already received, reaching a higher specific weight, higher mechanical strength and generally acquiring a typical pearly appearance.

Sheet 1, which was first perfectly thermoplatic and amorphous, changes to a condition of higher heat resistance and crystallinity.

To rapidly block the correct form, and confer a sort of hardening and extract the container, as shown in fig. 4, the forming counterdie 3 is eliminated and cooling, cutting and extracting counterdie 4 rapidly introduced. It has the complementary form of the container formed, has a cutting crown, is cooled with the circulation of cooling water or liquid at 50°C and connected by means of a large number of peripheral holes to a vacuum pump.

The insertion of the counterdie 4 separates the formed con tainer from the forming ring, and keeps the container adherent to the cold walls and temperature. Extraction of cooling, sucking counterdie 4 drags with it the crystallized and/or heat resistant container in the same time that it cools it, so that it may be extracted, eliminating the vacuum and introducing a low pressure, which detaches the container from the counterdie 4.

A description has been given of an illustrative form of application of the process, which may vary according to the form of container to be obtained, always observing the fundamental innovation of the wall of external formation at temperature between 155°C and 175°C, i.e. near 180°C, which represents the temperature of maximum crystallization speed, where it remains for a very short time, essentially variable with the thickness of the sheet necessary to reach the highest threshold. The container is then immediately coupled to a completely internal form, cold and kept in suction to be able to extract the formed container, crystallized and heat resistant, regardless of its form.

Consequently, the container treated in this way has no localized fragility, has acquired high tenacity and can be inserted in boiling water or even in steam superheated to 130°C, without deformation.

## Claims

1) Method for the production of containers from amorphous sheets of polyethylenterephthalate, characterized by the fact that it consists in the following phases:

a) form the sheet of polyethyleneterephthalate unstretched in a die at temperature equal to, or near, the slip temperature of the sheet;

b) submit the sheet to two-way expansion;

c) place the bistretched sheet in contact with the inside surface of the die heated to temperature near 180°C;

d) insert in the container thus formed a counterdie, complementary to the die, cooled and kept in suction; and

e) extract the formed container obtained.

2) Method according to claim 1, in which the slip temperature of the sheet is between 160°C and 165°C.

3) Method according to claim 1 or 2, in which the inside surface of the die is heated to temperature between 155°C and 175°C and the contact time is some fractions of a second.

4) Method according to any of the previous claims, in which the counterdie is cooled by the circulation of cold water or cooling liquid to 5°C and connected to a vacuum pump by peripheral holes.

5) Method according to any of the previous claims, in which the unstretched sheet is thrust towards the bottom of the die by a forming counterdie, and, while the sheet is kept at slip temperature, air or inert gas under pressure is introduced first between die and sheet then between counterdie and sheet.

6) Method according to claim 5, in which the forming counterdie is of truncated cone shape.

7) Method according to any of the previous claims, in which the cooling counterdie is provided with a cutting crown.

8) Polyethylenterephthalate containers resistant to temperatures above boiling point and in steam superheated to 130°C.

Fig. 1

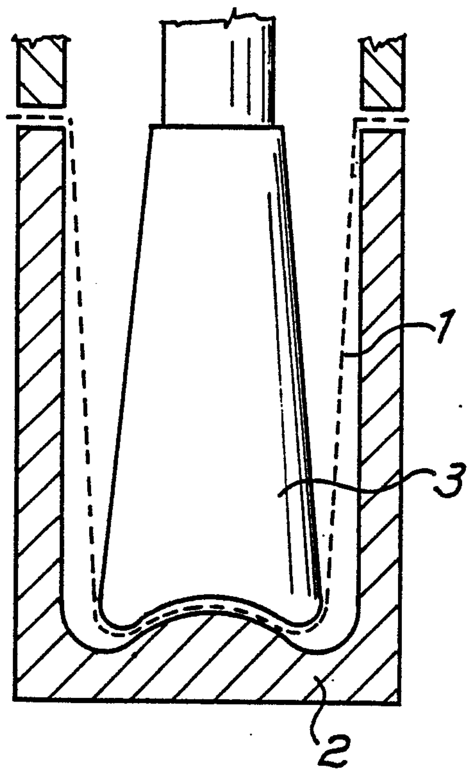


Fig. 2

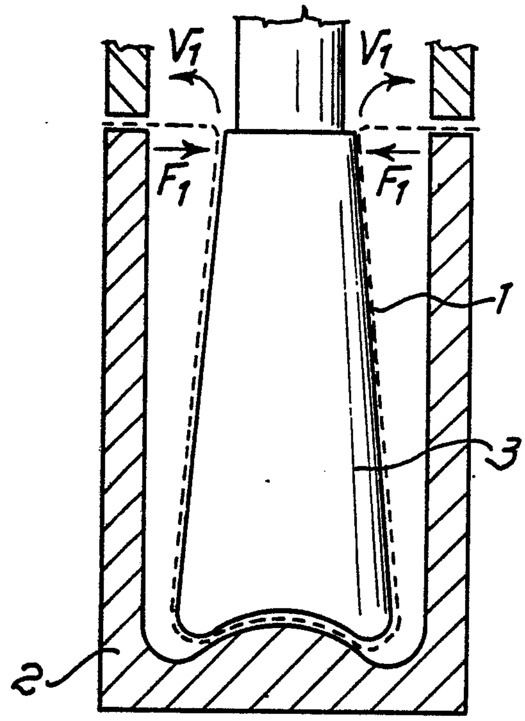


Fig. 3

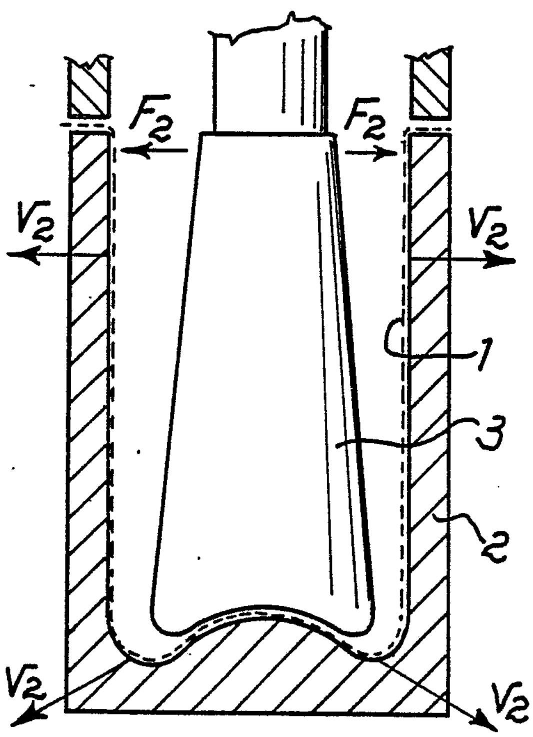


Fig. 4